# EUROPEAN PATENT APPLICATION

(11) **EP 2 418 136 A1**
(43) Date of publication of application: **15.02.2012**
(21) Application number: 11176927.9
(22) Date of filing: 09.08.2011
(51) Int. Cl.: B62B 1/14, B62B 1/26

(54) **Wheeled gripping and supporting device for vases**

(30) Priority: 09.08.2010 IT PD20100257
(71) Applicant: Gastaldi, Christian, 35131 Padova (IT)
(72) Inventor: Barbieri, Lucio, 35025 Cartura (PD) (IT)
(74) Representative: Modiano, Micaela Nadia

(57) **Abstract**

A device (10) for gripping and supporting large vases, particularly for plant nursery trolleys with two wheels (11). The device (10) comprises
- means (12) for gripping the upper rim of a vase and
- means (13) for supporting the bottom of the vase from below.

## Description

The present invention relates to a gripping and supporting device for medium and large vases, particularly for plant nursery trolleys with two wheels.

Trolleys with two wheels are known today for carrying heavy loads, particularly for carrying potted plants, constituted by a base structure with two mutually opposite coaxial wheels for movement on the ground, a steering bar protruding from the base structure and provided with means at its upper end for gripping by an operator.

Means for lifting loads of the nursery-gardening and building type and the like are associated with the steering bar.

These lifting means, if used for gripping medium and large vases, are constituted by a device of the type comprising two toothed jaws, elastically returned to each other in a substantially horizontal direction, for gripping the folded upper rim of a vase, and a lower abutment for supporting a lower side part of the vase.

This gripping device, although widespread and appreciated for its effectiveness, does not permit the transport of large and very large vases, that is to say of a diameter between eighty centimeters and one meter and of a weight between two hundred and three hundred kilograms with the plant potted.

In fact for vases above a certain weight, the curved and toothed platelike element that forms each one of the jaws is capable of hooking under the folded rim that is typical of plastic vases, but the traction for lifting the vase, being applied in that region only, often causes the breakage of the upper rim of the vase and thus the impossibility of lifting it, the plastic generally being of low quality and not very strong, and this defect of low strength is made even worse in summer by the heat of the sun and in the colder months by low temperatures.

Moreover, such devices are assisted at the most by a resting element for the lower part of the vase, but not by a system for supporting the bottom of the vase from below.

Also known are trolleys with a resting surface for carrying a vase, which have the obvious drawback of requiring a massive manual effort to load the vase onto the transport surface.

Trolleys with two wheels also exist with forks, which are provided with a hoist associated with the steering handlebars. After being suitably harnessed, the vase is secured to the hoist. This system is not very practical and thus it is very slow to use, with obvious effects on the pace of work of an operator who has to make use of such a device.

The aim of the present invention is to provide a gripping and supporting device for large vases, particularly for plant nursery trolleys with two wheels, which is capable of overcoming the drawbacks of the above-mentioned known devices.

Within this aim, an object of the invention is to provide a gripping and supporting device that is capable of limiting or entirely preventing the breakage of the folded upper rim of a plastic vase gripped for the lifting of the vase, the vase being understood to be of the known type with limitations in terms of the plastic material used for production, and thus not very strong especially in the heat of the sun and at low temperatures.

Another object of the invention is to provide a gripping and supporting device that makes it possible to preserve the integrity of the vase for the entire journey.

Another object of the invention is to provide a gripping and supporting device that can easily and quickly be used even by a person who has not received specific prior training.

Another object of the invention is to provide a gripping and supporting device that can be implemented in such a way as to be adapted to existing trolleys with two wheels of the manual type, as well.

Another object of the invention is to provide a gripping and supporting device for medium and large vases, particularly for plant nursery trolleys with two wheels, that can be made using known systems and technologies.

This aim and these and other objects which will become better apparent hereinafter, are achieved by a gripping and supporting device for large vases, particularly for plant nursery trolleys with two wheels, characterized in that it comprises
- means for gripping the upper rim of the vase and
- means for supporting the bottom of the vase from below.

Further characteristics and advantages of the invention will become better apparent from the following detailed description of a preferred, but not exclusive, embodiment of the gripping and supporting device for large vases, particularly for plant nursery trolleys with two wheels according to the invention, which is illustrated for the purposes of non-limiting example in the accompanying drawings, wherein:

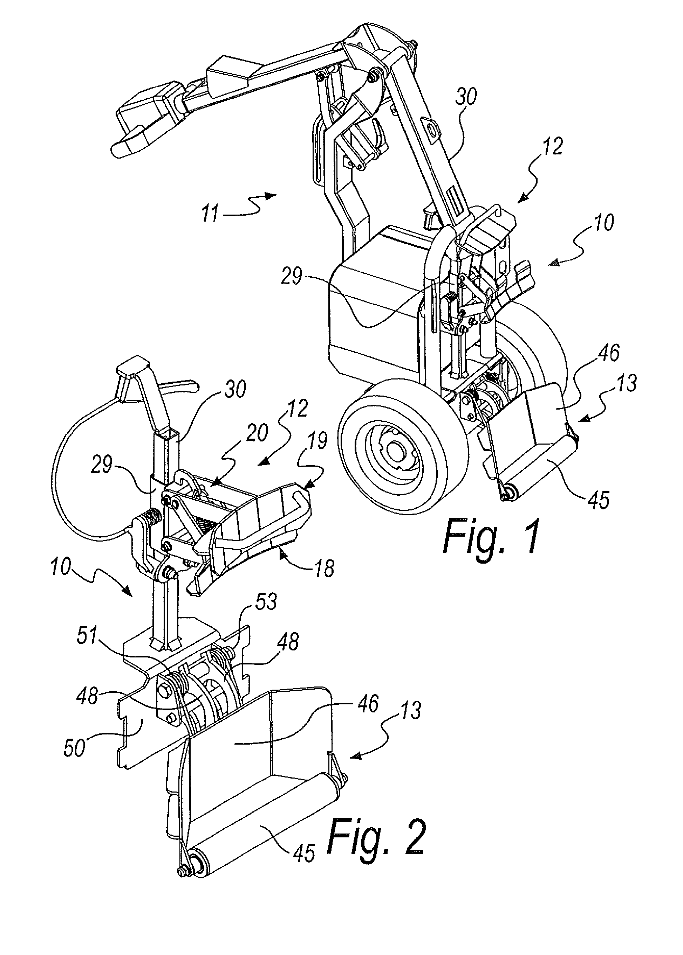

- Figure 1 is a perspective view of a device according to the invention, on board a plant nursery trolley with two wheels;
- Figure 2 is a perspective view of only the gripping and supporting device according to the invention;

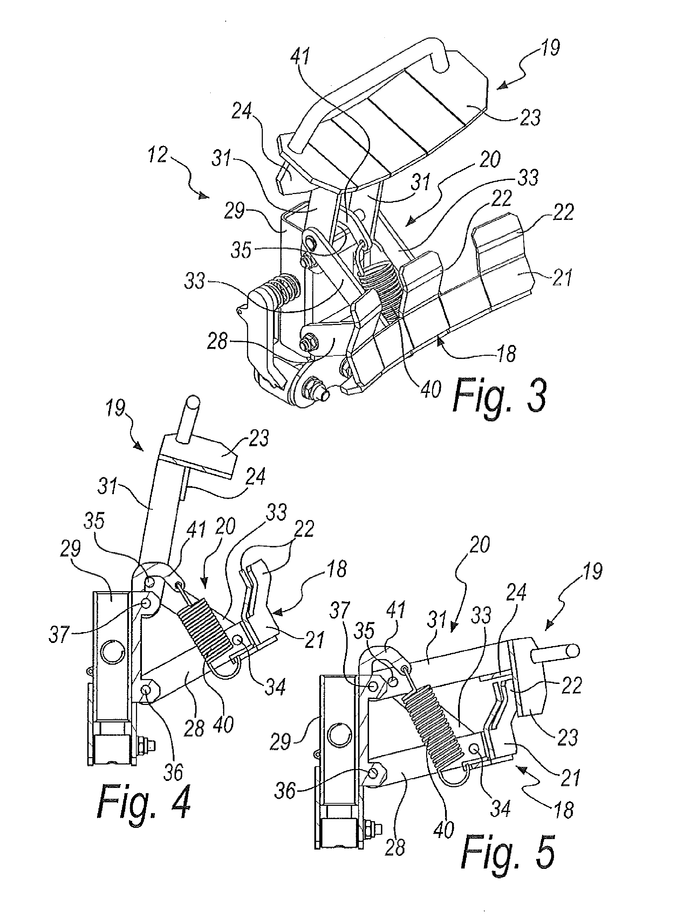

- Figure 3 is a perspective view of the means for gripping the upper rim of a vase, of the device according to the invention, in the open configuration;
- Figure 4 is a sectional side view of the gripping means of Figure 3;
- Figure 5 is the same side view as Figure 4, with the gripping means in the closed configuration and gripping a folded rim of a vase;
- Figure 6 is a sectional side view of the means for supporting from below;
- Figures 7 to 9 each show a step of an operation to grip a vase by means of a gripping and supporting device according to the invention;
- Figures 10 and 11 are views of a different embodiment of the device according to the invention.

With reference to the figures, a gripping and supporting device for medium and large vases, particularly for plant nursery trolleys with two wheels, according to the invention, is generally designated with the reference numeral 10.

A generic plant nursery trolley with two wheels is generally designated with the reference numeral 11.

This gripping and supporting device 10 comprises
- means 12 for gripping the upper rim of a vase and
- means 13 for supporting the bottom of the vase from below.

The generic vase, medium or large, is generally designated in the figures with the reference numeral 14.

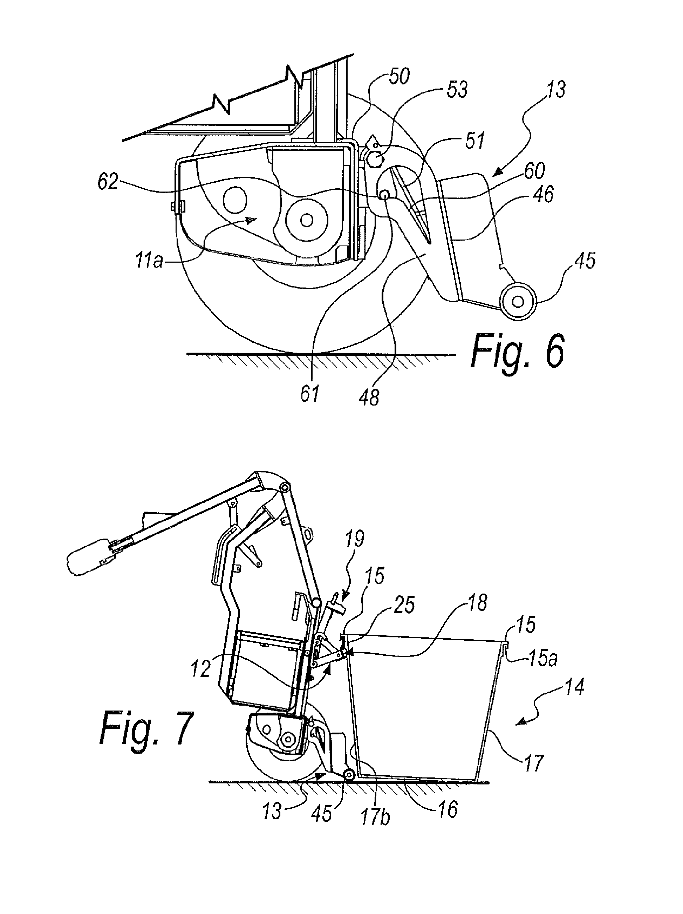

As shown in Figure 7, the folded upper rim of the vase 14 is designated with the reference numeral 15.

The bottom of the vase 14 is designated with the reference numeral 16.

The side wall of the vase 14 is designated with the reference numeral 17.

In the embodiment of the invention described herein for the purposes of non-limiting example of the invention, the means 12 of gripping the upper rim 15 of a vase are of the snare-like type.

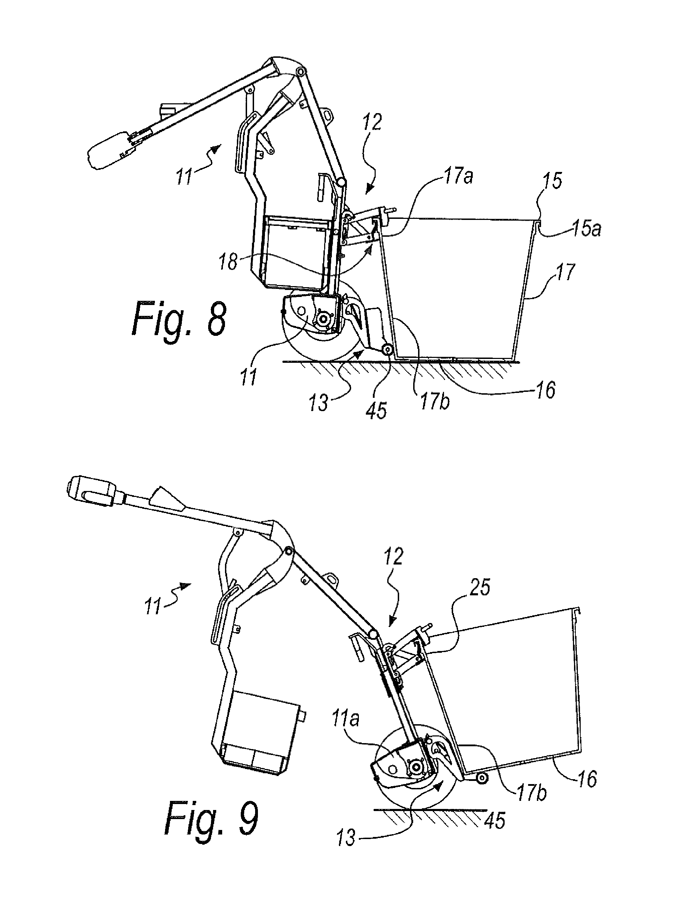

These snare-like grip means 12 comprise
- a lower element 18, for engagement and lifting, which is contoured so as to enter upward from below the annular channel 15a formed between the folded upper rim 15 of the vase 14 and the facing portion 17a of the side wall 17 of the vase 14,
- an upper element 19, for locking the rim 15 of the vase 14 and the portion 17a of the wall 17 of the vase at the lower element 18;
- a mechanism 20 designed to lower the upper element 19 so as to lock the rim 15 of the vase 14 on the lower element 18, when the lower element 18 descends upon engagement of the rim 15 of the vase 14 (Figure 7), and to lift the vase 14 for the first time, as shown in Figure 8.

The lower element 18, for engagement and lifting, is constituted by a first flat body 21, which is curved so as to imitate the wall curve 17 of a vase, and is provided with a plurality of grip teeth 22 which extend upward and are contoured so as to enter the annular channel 15a of the upper rim 15 of the vase.

The upper locking element 19 is constituted by a second flat body 23, which is curved substantially complementarily with respect to the first flat body 21 of the engagement element 18.

The second flat body 23 is supported by an upper abutment element 24, which is adapted to rest against the upper part of the folded upper rim 15 of the vase 14.

The second flat body 23 is adapted to be arranged against the internal surface 25 of the vase in proximity to the upper rim 15, as shown in Figure 7.

The first flat body 21 of the engagement element 18 and the second flat body 23 of the upper locking element 19 produce the grip of the interposed upper rim 15 of the vase 14, as shown in Figures 8 and 9.

The mechanism 20, which mutually couples and coordinates the movements of the engagement element 18 and of the locking element 19, comprises
- two symmetrical first arms 28 which support rigidly the engagement element 18, which is pivoted to a sleeve 29 to be fixed to the frame 30 of a plant nursery trolley 11,
- and two corresponding second arms 31, which support the locking element 19, the two second arms 31 being pivoted to the same sleeve 29 in a point which, in the configuration for use, lies higher than the sleeve 29.

The engagement element 18 is adapted to rotate downward due to the weight force of the vase 14 once it has engaged it by its folded rim 15 as shown in Figures 8 and 9 with respect to Figure 7.

The locking element 19 is adapted to rotate downward by a larger angle than the engagement element 18 due to two corresponding linkage elements 33, which are pivoted at one end with a first pivot 34 to the first arms 28 and at the opposite end with a second pivot 35 to the second arms 31, the center distance between the first fulcrum 36 and the first pivot 34 being greater than the center distance between the second fulcrum 37 and the second pivot 35.

The means 12 of gripping the upper rim 15 of the vase 14 are completed by an elastic return element, for example a helical spring 40, hooked to an appendage 41 fixed to the sleeve 29. When the rim 15 of the vase 14 is released, with the vase being set down on the ground at the end of transport, the spring 40 pulls the first arms 28 upward which, by means of the linkage elements 33, push the second arms 31, thus causing the automatic opening of the gripping means 12.

The means 13 for supporting the bottom 16 of the vase 14 from below are comprised of a cylindrical body, for example a roller 45, to support the bottom, which is pivoted on a substantially horizontal axis, in the configuration for use, to the base of a lateral supporting element 46, which is adapted to receive, by resting, a lower part 17b of the side wall 17 of the vase 14 during transport.

This lateral supporting element 46 is in turn supported by two third arms 48 which are pivoted on a horizontal axis to a bracket system 50 designed to be fixed to the base 11a of a plant nursery trolley 11.

The lateral supporting element 46 is pushed by elastic means, for example two helical springs 51, which are torsion-loaded and mounted coaxially to the pin, or pins 53, of the third arms 48, against the wall 17 of the vase 14 once it is gripped by the gripping means 12, as shown in Figure 8.

This lateral supporting element 46 and the roller 45 are adapted to rotate, pushed by the vase 14 that is gripped but not lifted, toward the base 11a of the trolley 11, so that then the roller 45 is arranged below the bottom 16 of the vase 14, as shown in Figure 9, and the lateral supporting element 46 substantially rests against the wall 17b of the vase 14 when the vase is lifted.

On the two third arms 48, respective slots 60 are formed.

A rear section 62 of the rim of these slots 60 forms a stroke limiting abutment, in the direction of rotation upward for the lateral supporting element 46, for an abutment element 61 which is fixed to the bracket system 50.

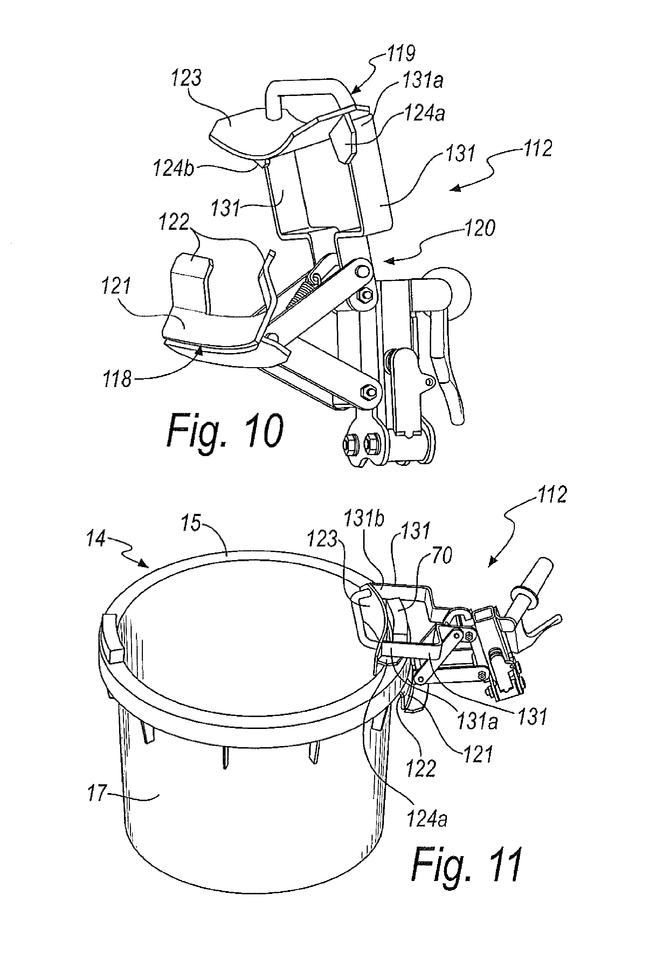

Figure 10 shows a different embodiment of the means for gripping the upper rim of the vase, designated here with the reference numeral 112.

In this different embodiment, the lower element 118, for engagement and lifting, has a first flat body 121, which is curved so as to imitate the wall curve 17 of the vase, and is provided with only two lateral grip teeth 122 which extend upward and are contoured so as to be inserted in the annular channel 15a of the upper rim 15 of the vase, at the region next to the sides of a grip handle 70 of the vase 14.

Moreover, the upper locking element 119, which is constituted by a second flat body 123 which is curved substantially complementarily with respect to the first flat body 121 of the engagement element 118, supports two lateral abutment fins 124a and 124b, which are designed to rest against the upper part of the folded upper rim 15 of the vase 14, each at one of the grip teeth 122, and thus are adapted to be arranged laterally at the sides of the handle 70.

The mechanism 120, which mutually couples and coordinates the movements of the engagement element 118 and of the locking element 119, comprises two corresponding second arms 131, supporting the locking element 119, the two second arms 131 being folded outward in 'S' shapes so that the ends 131a and 131b which support the second flat body 123 are spaced from each other so as to be arranged at the sides of the handle 70.

This different embodiment of the means 112 for gripping the upper rim of the vase makes it possible to grip the vase 14 at a handle 70, that is to say at a region that is generally stronger than the rest of the rim of the vase and which thus enables a grip that is more stable, safer and less inclined to breakage.

In practice it has been found that the invention fully achieves the intended aim and objects.

In particular, with the invention a gripping and supporting device is provided that is capable of limiting or entirely preventing the breakage of the folded upper rim of a plastic vase which is gripped for the lifting of that vase, thanks to the gripping means which are provided with a lower engagement element 18 and with an upper locking element 19, the cooperation of which in closing, pincer-like, the portion 17a of wall 17 of the vase at the lower element 18 prevents it from breaking.

Moreover, with the invention a gripping and supporting device is provided that makes it possible to preserve the integrity of the vase for the entire journey, thanks to the means 13 for supporting the bottom of the vase 14 from below, thanks to which the rim 15 of the vase 14 is subjected to traction stresses only at the act of first lifting, the roller 45 then coming into play as a support, which at least partially alleviates the load carried by the gripping means 12.

Moreover, with the invention, the damage-free transport of a vase, even of the known type, made of plastic material of low quality, is ensured, and thus the transport without breakage is ensured even in the hottest periods of summer as well as in the coldest periods of winter.

Moreover, with the invention a gripping and supporting device is provided that can easily and quickly be used even by a person who has not received specific prior training, where the sequence of operations to grip a vase is critical:
- bringing the trolley 11 to the vase by making it roll on the ground with the roller 45 optionally resting on the ground, until the engagement element 18 comes into contact with the wall 17 of the vase 14 below the folded upper rim 15;
- inclining the trolley 11 by manoeuvring the handlebars and inclining the frame 30, until the teeth 22 of the engagement element 18 are inserted in the annular channel 15a of the folded rim 15 (see Figure 7);
- inclining the frame 30 further, so that the first arms 28 rotate downward and cause the downward rotation of the locking element 19 so as to grip, pincer-like, in cooperation with the engagement element 18, the portion 17a of the side wall 17 of the vase 14 (see Figure 8);
- inclining the frame 30 of the trolley 11 still more, until the roller 45 slips underneath the bottom 16 of the vase 14, which comes to rest thereupon, as shown in Figure 9.

The sequence of operations to release and set down the vase 14 is trivial, and involves performing actions that are opposite to those described above, and as such this topic is not discussed.

What is more, with the invention a gripping and supporting device is provided that can be implemented in such a way as to be adapted to trolleys with two wheels of the known type, as well.

Last but not least, with the invention a gripping and supporting device for medium and large vases, particularly for plant nursery trolleys with two wheels, is provided, which can be made using known systems and technologies.

The invention, thus conceived, is susceptible of numerous modifications and variations, all of which are within the scope of the appended claims. Moreover, all the details may be substituted by other, technically equivalent elements.

In practice the materials employed, and the contingent dimensions and shapes, may be any according to requirements and to the state of the art.

The disclosures in Italian Patent Application No. PD2010A000257 from which this application claims priority are incorporated herein by reference.

Where technical features mentioned in any claim are followed by reference signs, such reference signs have been inserted for the sole purpose of increasing the intelligibility of the claims and accordingly such reference signs do not have any limiting effect on the interpretation of each element identified by way of example by such reference signs.

## Claims

1. A gripping and supporting device (10) for large vases, particularly for plant nursery trolleys with two wheels (11), **characterized in that** it comprises
- means (12; 112) for gripping the upper rim of a vase and
- means (13) for supporting the bottom of the vase from below.

2. The device according to claim 1, **characterized in that** said means for gripping the upper rim of a vase are of the snare-like type.

3. The device according to claim 2, **characterized in that** said snare-like grip means (12) comprise
- a lower element for engagement and lifting, which is contoured so as to enter upward from below the annular channel formed between the folded upper rim of a vase and the facing wall portion of said vase,
- an upper element for locking the rim of the vase and a portion of the wall of the vase at said lower element;
- a mechanism designed to lower said upper element so as to lock the rim of the vase on said lower element when said lower element descends upon engagement of the rim of the vase.

4. The device according to the preceding claims, **characterized in that** said lower engagement and lifting element is constituted by a flat body which is curved so as to imitate the curved wall of a vase and is provided with a plurality of grip teeth which extend upward and are contoured so as to enter said annular channel of the upper rim of the vase.

5. The device according to the preceding claims, **characterized in that** said upper locking element is constituted by a further flat body which is curved substantially complementarily with respect to said flat body of the engagement element, said further flat body being supported by an upper abutment element, which is adapted to rest against the upper part of the folded upper rim of the vase, said further flat body being adapted to be arranged against the internal surface of the vase proximate to the upper rim of said vase, said flat body of said engagement element and said further flat body of said upper locking element gripping the interposed upper rim of the vase.

6. The device according to the preceding claims, **characterized in that** said mechanism comprises at least one first arm, which supports rigidly said engagement element, which is pivoted to a sleeve to be fixed to the frame of a plant nursery trolley, and at least one second arm, which supports said locking element, which is pivoted to said sleeve in a point which, in the configuration for use, lies higher than said sleeve, said engagement element being adapted to rotate downward due to the weight force of the vase once it has engaged it by its folded rim, said locking element being adapted to rotate downward by a larger angle due to at least one linkage element which is pivoted at one end, by means of a first pivot, to said at least one first arm and at the opposite end, by means of a second pivot, to said at least one second arm, the center distance between the first fulcrum and the first pivot being greater than the center distance between the second fulcrum and the second pivot.

7. The device according to the preceding claims, **characterized in that** said means for supporting the bottom of the vase from below are constituted by at least one cylindrical bottom supporting body, which is pivoted with a substantially horizontal axis, in the configuration for use, to a lateral supporting element for a lower part of the side wall of a vase during transport, said lateral supporting element being in turn pivoted with its horizontal axis to a bracket system designed to be fixed to a plant nursery trolley and being pushed by elastic means against the wall of a vase gripped by said grip means, said lateral resting element with said cylindrical body being adapted to rotate, pushed by the vase that is gripped but not lifted, so that then the cylindrical body is arranged below the vase and the resting element is arranged against the wall of the vase once the vase has been lifted.

8. The device according to one or more of the preceding claims, **characterized in that** said means of gripping the upper rim of the vase (112) are provided with:
- a lower element (118), for engagement and lifting, having a first flat body (121), which is curved so as to imitate the wall curve (17) of the vase, and provided with only two lateral grip teeth (122) which extend upward and are contoured so as to be inserted in the annular channel (15a) of the upper rim (15) of the vase, at the regions next to the sides of a grip handle (70) of the vase (14);
- an upper locking element (119), which is constituted by a second flat body (123) curved substantially complementarily with respect to the first flat body (121) of the engagement element (118), and which supports two lateral abutment fins (124a, 124b), designed to rest against the upper part of the folded upper rim (15) of the vase (14), each at one of the grip teeth (122), and thus are adapted to be arranged laterally at the sides of the handle (70);
- a mechanism (120), which mutually couples and coordinates the movements of the engagement element (118) and of the locking element (119), comprising two corresponding second arms (131), supporting said locking element (119), the two second arms (131) being folded outward in 'S' shapes, whose ends (131a, 131b) that support the second flat body (123) are spaced from each other so as to be arranged at the sides of the handle (70).
